# EUROPEAN PATENT APPLICATION

(11) **EP 3 582 083 A1**
(43) Date of publication of application: **18.12.2019**
(21) Application number: 19180376.6
(22) Date of filing: 14.06.2019
(51) Int. Cl.: G06F 3/01

(54) **SYSTEMS AND METHODS FOR CONTROLLING ACTUATOR DRIVE SIGNALS FOR IMPROVING TRANSIENT RESPONSE CHARACTERISTICS**

(30) Priority: 15.06.2018 US 201816010384
(71) Applicant: Immersion Corporation, San Jose, CA 95134 (US)
(72) Inventor: SHAH, Kaniyalal, San Jose, CA California 95134 (US); BILLINGTON, Doug, San Jose, CA California 95134 (US)
(74) Representative: McDougall, Robert Campbell

(57) **Abstract**

Systems (100, 200) and methods for controlling actuator drive signals for improving transient response characteristics are disclosed. One illustrative system described herein includes: an actuator (118, 208) configured to output a haptic effect, the actuator (118, 208) comprising one or more rated characteristics; a sensor (120, 210) configured to monitor at least one of a position, a mass, a voltage, a back electromotive force, or a current of the actuator (118, 208); and a processor (102, 204) configured to: output a first drive signal to the actuator (118, 208), the first drive signal comprising a first characteristic higher than one or more of the rated characteristics; and output a second drive signal to the actuator (118, 208) based on data received from the sensor (120, 210).

## Description

This application relates to designing haptic effects, and more particularly to systems and methods for designing improved haptic effects by controlling actuator drive signals.

Haptic-enabled devices have become increasingly popular as are haptic-enabled environments. For instance, mobile and other devices may be configured with touch-sensitive surfaces so that a user can provide input by touching portions of the touch-sensitive display. As more haptic-enabled environments are being used, a desire for sharp haptic feedback has emerged. However, in order to achieve this sharp haptic feedback, an expensive actuator and additional control system must be used. There is therefore a need for cheaper and more efficient actuator systems for providing sharp haptic feedback.

In a first aspect, there is provided a haptic feedback system according to the present disclosure. The haptic feedback system may comprise an actuator configured to output a haptic effect, the actuator optionally comprising one or more rated characteristics. The system may comprise a processor that may be configured to: output a first drive signal to the actuator, the first drive signal optionally comprising a first characteristic higher than one or more of the rated characteristics; and output a second drive signal to the actuator, the second drive signal optionally having substantially the same characteristics as the first drive signal, the second drive signal optionally being 180 degrees out of phase from the first drive signal and optionally being configured to cause the actuator to apply a braking force.

In a second aspect, there is provided a haptic feedback system according to the present disclosure. The haptic feedback system comprises: an actuator configured to output a haptic effect, the actuator comprising one or more rated characteristics; and a processor configured to: output a first drive signal to the actuator, the first drive signal comprising a first characteristic higher than one or more of the rated characteristics; and output a second drive signal to the actuator, the second drive signal having substantially the same characteristics as the first drive signal, the second drive signal 180 degrees out of phase from the first drive signal and configured to cause the actuator to apply a braking force.

In a third aspect, there is provided a haptic feedback system according to the present disclosure. The haptic feedback system may comprise an actuator configured to output a haptic effect, the actuator optionally comprising one or more rated characteristics. The haptic feedback system may comprise a sensor optionally configured to monitor at least one of a position, a mass, a voltage, a back electromotive force, or a current of the actuator. The haptic feedback system may comprise a processor optionally configured to: output a first drive signal to the actuator, the first drive signal optionally comprising a first characteristic higher than one or more of the rated characteristics, the first drive signal optionally configured to cause the actuator to output the haptic effect; and output a second drive signal to the actuator based on data received from the sensor, the second drive signal optionally configured to cause the actuator to stop outputting the haptic effect.

One or more of the first, second and third aspects may be modified in any suitable way as described herein, including, but not limited to, any of the optional modifications listed for the eighth aspect.

In a fourth aspect, there is provided a method of generating a haptic effect according to the present disclosure. The method may comprise outputting a first drive signal to an actuator configured to output a haptic effect, the actuator optionally comprising one or more rated characteristics, the first drive signal optionally comprising a first characteristic higher than one or more of the rated characteristics. The method may comprise outputting a second drive signal to the actuator, the second drive signal optionally having substantially the same characteristics as the first drive signal, the second drive signal optionally being 180 degrees out of phase from the first drive signal and optionally being configured to cause the actuator to apply a braking force.

In a fifth aspect, there is provided a method of generating a haptic effect according to the present disclosure. The method comprises outputting a first drive signal to an actuator configured to output a haptic effect, the actuator comprising one or more rated characteristics, the first drive signal comprising a first characteristic higher than one or more of the rated characteristics; and outputting a second drive signal to the actuator, the second drive signal having substantially the same characteristics as the first drive signal, the second drive signal 180 degrees out of phase from the first drive signal and configured to cause the actuator to apply a braking force.

In a sixth aspect, there is provided a method of generating a haptic effect according to the present disclosure. The method may comprise outputting a first drive signal to an actuator configured to output a haptic effect, the actuator optionally comprising one or more rated characteristics, the first drive signal optionally comprising a first characteristic higher than one or more of the rated characteristics. The method may comprise outputting the haptic effect and optionally monitoring at least one of a position, a mass, a voltage, a back electromotive force, or a current of the actuator using a sensor coupled to a processor. The method may comprise outputting a second drive signal to the actuator based on data received from the sensor, and optionally stopping output of the haptic effect based on the second drive signal.

One or more of the fourth, fifth and sixth aspects may be modified in any suitable way as described herein, including, but not limited to, any of the optional modifications listed for the ninth aspect.

In a seventh aspect, a non-transitory computer readable medium is provided. The non-transitory computer readable medium may comprise program code, which when executed by a processor is configured to cause the processor to perform such methods as described in any of the fourth, fifth, sixth or ninth aspects including, optionally, any of the optional modifications described in respect of these aspects. The non-transitory computer readable medium may be configured to: output a first drive signal to an actuator configured to output a haptic effect, the actuator optionally comprising one or more rated characteristics, the first drive signal optionally comprising a first characteristic higher than one or more of the rated characteristics; and output a second drive signal to the actuator, the second drive signal optionally having substantially the same characteristics as the first drive signal, the second drive signal optionally being 180 degrees out of phase from the first drive signal and optionally being configured to cause the actuator to apply a braking force.

In an eighth aspect, a haptic feedback system is provided. The haptic feedback system comprises: an actuator configured to output a haptic effect, the actuator comprising one or more rated characteristics; a sensor configured to monitor at least one of a position, a mass, a voltage, a back electromotive force, or a current of the actuator; and a processor. The processor is configured to: output a first drive signal to the actuator, the first drive signal comprising a first characteristic higher than one or more of the rated characteristics, the first drive signal configured to cause the actuator to output the haptic effect; and output a second drive signal to the actuator based on data received from the sensor, the second drive signal configured to cause the actuator to stop outputting the haptic effect.

The first, second, third and eighth aspects may be modified in any suitable way disclosed herein, including but not limited to, any one or more of the following.

The first characteristic may comprise at least one of: a voltage, frequency, current, or controlled duty cycle. The controlled duty cycle may be at least 70%. The first drive signal may be output for a time period less than an amount of time necessary for the actuator to reach a steady state at a rated voltage. The second drive signal may comprise substantially the same characteristics as the first drive signal and, optionally, one or more of a 180 degree phase change, a lower frequency, or a delay gap causing the actuator to apply a braking force. The processor may be further configured to output a calibrating drive signal to the actuator, the calibrating drive signal optionally comprising one or more of the rated characteristics. The processor may be further configured to determine a steady state response of the actuator based on data received from the sensor. The processor may be further configured to adjust the first characteristic based on data received from the sensor. The processor may be further configured to adjust the first characteristic to cause the actuator to accelerate or decelerate.

In a ninth aspect, there is provided a method of generating a haptic effect according to the present disclosure. A method of generating a haptic effect comprising: outputting a first drive signal to an actuator configured to output a haptic effect, the actuator comprising one or more rated characteristics, the first drive signal comprising a first characteristic higher than one or more of the rated characteristics; outputting the haptic effect; monitoring at least one of a position, a mass, a voltage, a back electromotive force, or a current of the actuator using a sensor coupled to a processor; outputting a second drive signal to the actuator based on data received from the sensor; and stopping output of the haptic effect based on the second drive signal.

The fourth, fifth, sixth and ninth aspects may be modified in any suitable way disclosed herein, including but not limited to, any one or more of the following.

The first characteristic may comprise at least one of: a voltage, frequency, current, or controlled duty cycle. The controlled duty cycle may be at least 70%. The first drive signal may be output for a time period less than an amount of time necessary for the actuator to reach a steady state at a rated voltage. The second drive signal may comprise substantially the same characteristics as the first drive signal and optionally one or more of a 180 degree phase change, a lower frequency, or a delay gap causing the actuator to apply a braking force. The method may comprise outputting a calibrating drive signal to the actuator, the calibrating drive signal optionally comprising one or more of the rated characteristics. The method may comprise determining a steady state response of the actuator based on data received from the sensor. The method may comprise adjusting the first characteristic based on data received from the sensor. Adjusting the first characteristic optionally causes the actuator to accelerate or decelerate. The sensor may be embedded in the actuator.

In a tenth aspect there is provided a non-transitory computer readable medium comprising program code, which when executed by a processor is configured to cause the processor to: output a first drive signal to an actuator configured to output a haptic effect, the actuator comprising one or more rated characteristics, the first drive signal comprising a first characteristic higher than one or more of the rated characteristics, the first drive signal configured to cause the actuator to output the haptic effect; monitoring at least one of a position, a mass, a voltage, a back electromotive force, or a current of the actuator using a sensor coupled to a processor; and output a second drive signal to the actuator based on data received from the sensor, the second drive signal configured to cause the actuator to stop outputting the haptic effect.

The tenth aspect may be modified in any suitable way as described herein including, but not limited to, any of the optional modifications listed for the seventh aspect.

In an eleventh aspect there is provided a method of generating a haptic effect according to the present disclosure. The method comprises: outputting a first drive signal to an actuator; outputting a second drive signal to an actuator; monitoring a characteristic of the actuator; outputting a calibrating drive signal to the actuator; determining the steady state response of the actuator; and adjusting the characteristic.

These aspects are mentioned not to limit or define the limits of the present subject matter, but to provide examples to aid understanding thereof. In addition, it is envisaged that the aspects may be modified in any suitable way as described herein. For example, it is envisaged that each of the aspects may be taken in combination with one or more of the optional modifications described in respect of any of the other aspects. The aspects are discussed in the Detailed Description, and further description is provided there. Advantages offered by various embodiments may be further understood by examining this specification and/or by practicing one or more embodiments of the claimed subject matter.

A full and enabling disclosure is set forth more particularly in the remainder of the specification. The specification makes reference to the following appended figures.
Figure 1 shows an illustrative system for controlling actuator drive signals for improving transient response characteristics according to one embodiment of the present disclosure.
Figure 2 shows another illustrative system for controlling actuator drive signals for improving transient response characteristics according to one embodiment of the present disclosure.
Figure 3 is a flow chart of method steps for controlling actuator drive signals for improving transient response characteristics according to one embodiment of the present disclosure.

Reference will now be made in detail to various and alternative illustrative embodiments and to the accompanying drawings. Each example is provided by way of explanation, and not as a limitation. It will be apparent to those skilled in the art that modifications and variations can be made. For instance, features illustrated or described as part of one embodiment may be used in: another embodiment to yield a still further embodiment; and/or in any of the first to eleventh aspects listed above. Thus, it is intended that this disclosure include modifications and variations as come within the scope of the appended claims and their equivalents.

### Illustrative Example of a System for Controlling Actuator Drive Signals for Improving Transient Response Characteristics

One illustrative embodiment of the present disclosure comprises a haptic device, which may include an electronic device, such as a tablet, e-reader, mobile phone, computer such as a laptop or desktop computer, wearable device, or interface for Virtual Reality (VR) or Augmented Reality (AR). The haptic device comprises a haptic output device, e.g., an actuator, an actuator driver, and a processor in communication with each of these elements. In the illustrative embodiment, the haptic output device is configured to output haptic effects. Further, the illustrative haptic device may be configured to receive user interaction with conventional interface devices, e.g., one or more of a touchscreen, mouse, joystick, multifunction controller, etc.

In the illustrative embodiment, the haptic device further comprises a processor programmed to process data associated with interaction with the interface device. For example, the user may press on a touchscreen with a finger and interact with one or more objects or icons in a graphical user interface displayed in the touchscreen. The illustrative haptic device is further configured to determine haptic effects based in part on the user interaction and to output haptic effects in response to the user interaction. In the illustrative embodiment, the haptic output device may comprise one or more rated characteristics, e.g., a rated voltage, frequency, current, or duty cycle, at which the haptic output device is designed to operate. For example, in one embodiment, the haptic output device may comprise a Linear Resonant Actuator (LRA) designed to operate at a predetermined voltage and current.

In the illustrative embodiment, the processor outputs a first drive signal to the actuator driver, which then drives the actuator. The first drive signal comprises at least one first characteristic that is higher than at least one of the rated characteristics. For example, the first drive signal may comprise a voltage and a controlled duty cycle that are both higher than the rated voltage and rated duty cycle. This will result in the actuator reaching a steady state response faster than if the rated voltage and the rated duty cycle were applied. In some embodiments, the first drive signal is output only for a period of time less than the amount of time it takes the actuator to reach a steady state at the rated voltage. For example, the first drive signal may be output for one half cycle (e.g., one half a rotation for a rotary actuator).

In the illustrative embodiment, the processor outputs a second drive signal to the actuator driver, which then drives the actuator again. In the illustrative embodiment, the second drive signal comprises a signal at substantially the same frequency as the first drive signal; however, the second drive signal is 180° out of phase from the first drive signal. When the actuator is driven using this second drive signal, the actuator outputs a braking force.

In some embodiments, the illustrative processor is programed to receive data from a sensor monitoring various characteristics of the actuator, e.g., the position of the actuator. In the illustrative embodiment, the sensor may also monitor the mass, voltage, or current of the actuator. The processor may monitor these characteristics and make determinations regarding the operation of the actuator, e.g., the processor may determine when the actuator has reached a steady state response. In some embodiments the processor may apply drive signals, or modify characteristics of drive signals, based in part on data received from the sensor. For example, the processor may modify one or more of the voltage, frequency, current, or duty cycle of the drive signal based on data received from the sensor. For example, in the illustrative embodiment, the processor may output a calibrating drive signal to the actuator driver, which then drives the actuator. This calibrating signal comprises one or more of the rated characteristics of the actuator. In some embodiments, the processor may adjust the first characteristic of the first drive signal to an optimal value based on the data received from the sensor.

In another illustrative embodiment, the processor may output a drive signal to the actuator driver comprising significantly higher voltage than the rated drive voltage of the actuator for a very short period of time. In some illustrative embodiments, the duty cycle of the drive voltage is controlled based on the resonance frequency of the actuator as a starting point to allow a significantly higher duty cycle to provide higher energy to the actuator. In other illustrative embodiments, the actuator steady state characteristics are utilized as a guiding principle to enable the actuator to keep operating within its operating region for haptic strength. In still other illustrative embodiments, the sensor may monitor characteristics of the actuator, e.g., for every cycle or half cycle, and the processor may adjust the drive signal to the optimal value based on the data received from the sensor.

This illustrative example is given to introduce the reader to the general subject matter discussed herein and the disclosure is not limited to this example. The following sections describe various additional non-limiting examples of the present disclosure.

### Illustrative Systems for Controlling Actuator Drive Signals for Improving Transient Response Characteristics

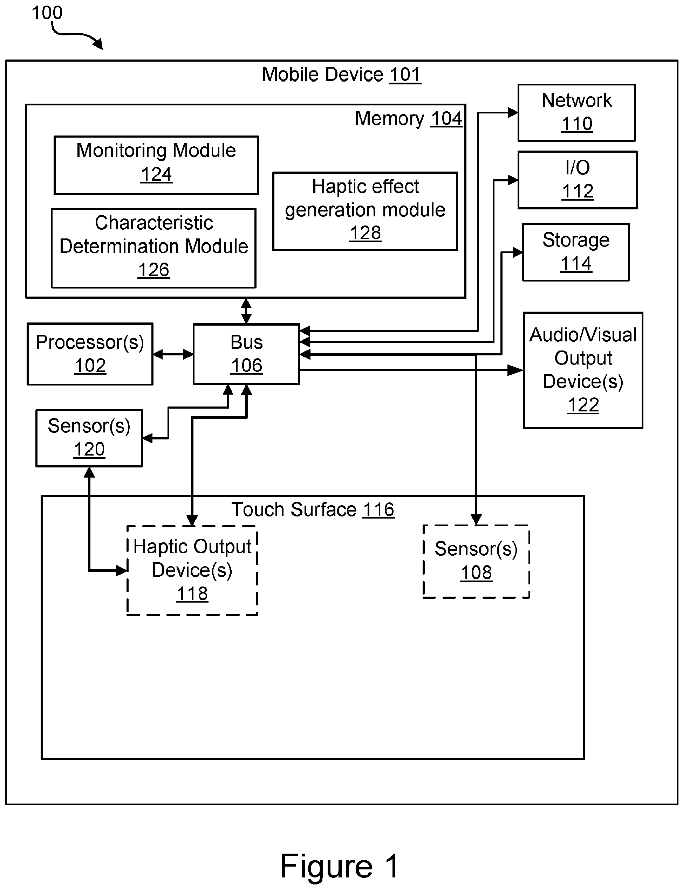

Figure 1 shows an illustrative system 100 for controlling actuator drive signals for improving transient response characteristics. Particularly, in this example, system 100 comprises a mobile device 101 having a processor 102 interfaced with other hardware via bus 106. A memory 104, which can comprise any suitable tangible (and non-transitory) computer-readable medium such as RAM, ROM, EEPROM, or the like, embodies program components that configure operation of the mobile device 101. In this example, mobile device 101 further includes one or more network devices 110, input/output (I/O) interface components 112, and additional storage 114.

Network device 110 can represent one or more of any components that facilitate a network connection. Examples include, but are not limited to, wired interfaces such as Ethernet, USB, IEEE 1394, and/or wireless interfaces such as IEEE 802.11, Bluetooth, or radio interfaces for accessing cellular telephone networks (e.g., transceiver/antenna for accessing a CDMA, GSM, UMTS, or other mobile communications network).

I/O components 112 may be used to facilitate connection to devices such as one or more displays, headsets comprising displays, curved displays (e.g., the display includes angled surfaces extended onto one or more sides of mobile device 101 on which images may be displayed), keyboards, mice, speakers, microphones, cameras (e.g., a front and/or a rear facing camera on a mobile device) and/or other hardware used to input data or output data. Storage 114 represents nonvolatile storage such as magnetic, optical, or other storage media included in mobile device 101.

Audio/visual output device(s) 122 comprise one or more devices configured to receive signals from processor(s) 102 and provide audio or visual output to the user. For example, in some embodiments, audio/visual output device(s) 122 may comprise a display such as a touch-screen display, LCD display, plasma display, CRT display, projection display, a headset comprising a display for each eye (e.g., for use in mixed reality or virtual reality), or some other display known in the art. Further, audio/visual output devices may comprise one or more speakers configured to output audio to a user.

System 100 further includes a touch surface 116, which, in this example, is integrated into mobile device 101. Touch surface 116 represents any surface that is configured to sense touch input of a user. In some embodiments, touch surface 116 may be configured to detect additional information associated with the touch input, e.g., the pressure, speed of movement, acceleration of movement, temperature of the user's skin, or some other information associated with the touch input. One or more sensors 108 may be configured to detect a touch in a touch area when an object contacts a touch surface and provide appropriate data for use by processor 102. Any suitable number, type, or arrangement of sensors can be used. For example, resistive and/or capacitive sensors may be embedded in touch surface 116 and used to determine the location of a touch and other information, such as pressure. As another example, optical sensors with a view of the touch surface may be used to determine the touch position.

Further, in some embodiments, touch surface 116 and/or sensor(s) 108 may comprise a sensor that detects user interaction without relying on a touch sensor. For example, in one embodiment, the sensor may comprise a sensor configured to use electromyography (EMG) signals to detect pressure applied by a user on a surface. Further, in some embodiments, the sensor may comprise RGB or thermal cameras and use images captured by these cameras to estimate an amount of pressure the user is exerting on a surface.

In some embodiments, sensor 108 and touch surface 116 may comprise a touch-screen display or a touch-pad. For example, in some embodiments, touch surface 116 and sensor 108 may comprise a touch-screen mounted overtop of a display configured to receive a display signal and output an image to the user. In other embodiments, the sensor 108 may comprise an LED detector. For example, in one embodiment, touch surface 116 may comprise an LED finger detector mounted on the side of a display. In some embodiments, the processor is in communication with a single sensor 108, in other embodiments, the processor is in communication with a plurality of sensors 108, for example, a first touch screen and a second touch screen.

In some embodiments one or more sensor(s) 108 further comprise one or more sensors configured to detect movement of the mobile device (e.g., accelerometers, gyroscopes, cameras, GPS, or other sensors). These sensors may be configured to detect user interaction that moves the device in the X, Y, or Z plane. The sensor 108 is configured to detect user interaction, and based on the user interaction, transmit signals to processor 102. In some embodiments, sensor 108 may be configured to detect multiple aspects of the user interaction. For example, sensor 108 may detect the speed and pressure of a user interaction, and incorporate this information into the interface signal. Further, in some embodiments, the user interaction comprises a multi-dimensional user interaction away from the device. For example, in some embodiments a camera associated with the device may be configured to detect user movements, e.g., hand, finger, body, head, eye, or feet motions or interactions with another person or object.

In this example, a haptic output device 118 in communication with processor 102 is coupled to touch surface 116. In some embodiments, haptic output device 118 is configured, in response to a haptic signal, to output a haptic effect associated with the touch surface 116. Additionally or alternatively, haptic output device 118 may provide vibrotactile haptic effects that move the touch surface in a controlled manner. Some haptic effects may utilize an actuator coupled to a housing of the device, and some haptic effects may use multiple actuators in sequence and/or in concert. For example, in some embodiments, a surface texture may be simulated by vibrating the surface at different frequencies. In such an embodiment haptic output device 118 may comprise one or more of, for example, a linear resonant actuator (LRA), a piezoelectric actuator, an eccentric rotating mass motor (ERM), an electric motor, an electromagnetic actuator, a voice coil, a shape memory alloy, an electro-active polymer, or a solenoid. In some embodiments, haptic output device 118 may comprise a plurality of actuators, for example an ERM and an LRA.

In some embodiments, the haptic effect may be modulated based on other sensed information about user interaction, e.g., relative position of hands in a virtual environment, object position in a VR/AR environment, object deformation, relative object interaction in a GUI, UI, AR, VR, etc. In still other embodiments, methods to create the haptic effects include the variation of an effect of short duration where the magnitude of the effect varies as a function of a sensed signal value (e.g., a signal value associated with user interaction). In some embodiments, when the frequency of the effect can be varied, a fixed perceived magnitude can be selected and the frequency of the effect can be varied as a function of the sensed signal value.

Although a single haptic output device 118 is shown here, embodiments may use multiple haptic output devices of the same or different type to output haptic effects. For example, in one embodiment, a piezoelectric actuator may be used to displace some or all of touch surface 116 vertically and/or horizontally at ultrasonic frequencies, such as by using an actuator moving at frequencies greater than 20 - 25 kHz in some embodiments. In some embodiments, multiple actuators such as eccentric rotating mass motors and linear resonant actuators can be used alone or in concert to provide different textures and other haptic effects.

Mobile device 101 may also comprise one or more of sensors 120. Sensors 120 may be coupled to processor 102 and used to monitor various properties of the haptic output device 118, including, but not limited to, the position, mass, voltage, back electromotive force or current of haptic output device 118. In some embodiments, sensors 120 may comprise a hall sensor, a magnetic field sensor, an accelerometer, a gyroscope, or an optical sensor. In other embodiments, sensor 120 may be embedded in haptic output device 118.

Turning to memory 104, exemplary program components 124, 126, and 128 are depicted to illustrate how a device can be configured in some embodiments to control actuator drive signals for improving transient response characteristics. In this example, a monitoring module 124 configures processor 102 to monitor signals received from sensor 120 to determine if the haptic output device 118 has reached a steady state. For example, monitoring module 124 may sample sensor 120 to determine the position, mass, voltage, back electromotive force or current of the haptic output device 118.

Characteristic determination module 126 represents a program component that analyzes data, e.g., the position of the haptic output device 118, received from sensor 120. In some embodiments, characteristic determination module 126 may comprise program code configured to manipulate characteristics of a haptic effect, e.g., the effect's voltage, frequency, current, duty cycle, intensity, duration, or any other characteristic associated with a haptic effect, based on the data received from sensor 120. For example, in one embodiment, characteristic determination module 126 comprises code that determines, based on the sensor data, a characteristic of a drive signal that should be altered. Alternatively, in some embodiments, characteristic determination module 126 may comprise one or more preloaded haptic effects, e.g., haptic effects associated with particular characteristics of a drive signal to a specific haptic output device 118.

Haptic effect generation module 128 represents programming that causes processor 102 to generate and transmit a drive signal to haptic output device 118, which causes haptic output device 118 to generate a haptic effect. For example, haptic effect generation module 128 may access stored waveforms or commands to send to haptic output device 118. As another example, haptic effect generation module 128 may receive a desired type of effect and utilize signal processing algorithms to generate an appropriate signal to send to haptic output device 118. As a further example, a desired effect may be indicated along with target coordinates for the haptic effect and an appropriate waveform sent to one or more actuators to generate appropriate displacement of the surface (and/or other device components) to provide the haptic effect. Some embodiments may utilize multiple haptic output devices in concert to output a haptic effect.

System 100 may further implement closed-loop control of haptic effects. For example, in one embodiment, processor 102 may output a haptic signal corresponding to a desired haptic effect to the haptic output device 118. The processor 102 may also receive a reference signal. The reference signal may represent a sensor signal that would be generated if a haptic output device accurately created a haptic effect. At the same time the processor 102 may receive a sensor signal from sensor 120 corresponding to the haptic effect that is currently output.

The processor 102 may determine an error between the reference signal and the signal received from sensor 120. Based on the error, the processor 102 can determine how to modify the haptic signal to achieve an effect that is more representative of the reference signal. For instance, the processor 102 may increase the gain of the haptic signal to create a stronger effect. Alternatively, the processor 102 might utilize a different type of controller, such as a proportional or proportional integral controller to modify the haptic signal. Further the processor 102 may implement a combination of varying the gain and type of controller is used to modify the haptic signal.

For example, in the illustrative embodiment, the processor may modify one or more of the voltage, current, frequency, duty cycle, or phase of the drive signal based on the detected position of the haptic output device to improve the haptic effect. For example, the processor may invert the drive signal or output a drive signal that is 180 degrees out of phase from the original drive signal.

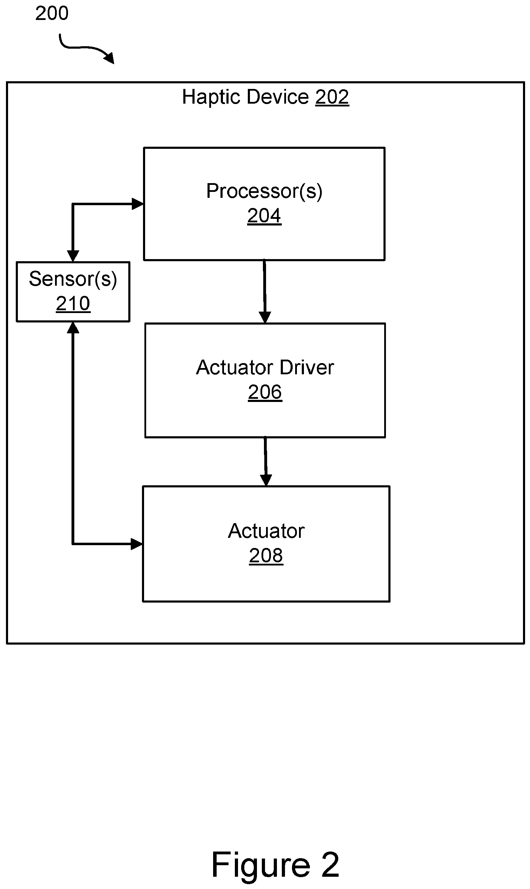

Turning now to Figure 2, Figure 2 illustrates an example embodiment for controlling actuator drive signals for improving transient response characteristics. Figure 2 is a diagram illustrating a system 200 comprising a haptic device 202. Haptic device 202 may be any device capable of outputting a haptic effect. This may include, a mobile device, a controller, a computer, etc. Haptic device 202 may be configured similarly to mobile device 101 of Figure 1 to include a processor 204 and sensor 210, though components such as the memory, touch surface, audio/visual output devices, and the like are not shown in this view for purposes of clarity.

As can be seen in Figure 2, haptic device 202 features a processor 204 in communication with a sensor 210, an actuator driver 206, and an actuator 208. In some embodiments, haptic device 202 may operate without a sensor 210, and in still other embodiments, haptic device 202 may operate with a plurality of sensors 210. The sensor 210 may be coupled to processor 204 and/or embedded in actuator 208. In some embodiments, sensor 210 may comprise a hall sensor, a magnetic field sensor, an accelerometer, a gyroscope, or an optical sensor.

In some embodiments, processor 204 controls actuator driver 206 to apply a drive signal to actuator 208. Processor 204 may control actuator driver 206 by generating drive signals that are output to actuator driver 206. Actuator driver 206 then drives actuator 208 based on the drive signals received from processor 204 to output a specific haptic effect based on the characteristics of the drive signal.

In some embodiments, the first drive signal comprises at least one first characteristic (e.g., voltage, frequency, current, or duty cycle) that is higher than at least one of the rated characteristics. For example, the first drive signal may comprise a drive voltage that is significantly higher than the rated voltage of actuator 208. In some embodiments, the first drive signal is output to actuator driver 206 for a short period of time less than the time it takes actuator 208 to reach steady state at the rated voltage. This may result in actuator 208 being optimally overdriven just enough to reach steady state. For example, optimal overdrive may mean that actuator 208 is driven at a voltage that is significantly higher than the rated voltage at a duty cycle of at least 70% for a short period of time (e.g., a period of time less than the amount of time it takes actuator 208 to reach a steady state at the rated voltage). This optimal overdrive may allow actuator 208 to attain steady state acceleration in a short period of time. This optimal overdrive differs from the industry standard of driving an actuator at a duty cycle of 50%. By driving an actuator at 4 V at a 50% duty cycle, the real voltage applied over time is actually 2 V. In contrast, at a higher duty cycle the actual applied voltage applied over time will be higher, leading to greater acceleration and/or velocity and more intense haptic effect. For example, the real voltage applied over time may be 2.8 V when an actuator is being driven at 4 V at a 70% duty cycle. Further, when driving an actuator at a 50% duty cycle, more cycles are required (e.g., 2-3 cycles) to be able to detect a resonance frequency. Whereas, driving actuator 208 at a significantly higher voltage than the rated voltage and at a higher duty cycle (e.g., at 70%-80% or more) enables a sensor 210 to detect the back electromotive force within the first half cycle to determine the resonance frequency causing the transient response of actuator 208 to improve.

For example, the actuator may be driven at a duty cycle of 70% for the first half cycle. During the remaining 30% of the first half cycle, a sensor 210 may detect the back electromotive force (back EMF). Based on this, corrective action may be taken for the next half cycle based on the result from the first half cycle sensing data. For example, the resonant frequency of the actuator may be determined based in part on the back EMF. In some embodiments the processor may send a braking signal at the optimal frequency to the actuator to stop the vibration. Such a braking signal may improve the transient response as compared to a generic braking signal which does not take into account the resonant frequency of the actuator. Due to manufacturing variances, even two actuators of the same model may have different resonant frequencies. The present disclosure allows for crisp haptic effects to be produced on any actuator, regardless of variance in manufacture.

In other embodiments, processor 204 outputs a second drive signal to actuator driver 206. The second drive signal comprises a signal having substantially the same characteristics as the first drive signal but is 180 degrees out of phase from the first drive signal. When actuator driver 206 drives actuator 208 using the second drive signal, actuator 208 outputs a braking force and thus stops outputting a haptic effect in a short period of time. In other embodiments, the second drive signal comprises a signal having substantially the same characteristics as the first drive signal but the frequency is lowered. For example, the first drive signal may be output at a constant frequency. When braking needs to occur, the second drive signal may be output at half the frequency of the first drive signal. In some embodiments, the second drive signal comprising a lower frequency is output when the frequency of the first drive signal is at a zero crossing point. The frequency of the second drive signal then has the opposite polarity of the frequency of the first drive signal resulting in actuator 208 outputting a braking force. In still other embodiments, the second drive signal comprises a signal having substantially the same characteristics as the first drive signal but a delay gap is added. When actuator driver 206 drives actuator 208 using the second drive signal, actuator 208 outputs a braking force.

In some embodiments, the drive signal actuator driver 206 receives from processor 204 is a calibrating drive signal. The calibrating drive signal comprises one or more of the rated characteristics of actuator 208. In some embodiments, sensor 210 may monitor various characteristics (e.g., position, mass, voltage, back electromotive force or current) of actuator 208 and send processor 204 data based on this monitoring. Using this data, processor 204 may determine when actuator 208 has reached a steady state response. In some embodiments, sensor 210 may monitor various characteristics of actuator 208 every half cycle. In other embodiments, processor 204 may adjust the first characteristics of the first drive signal based on data received from sensor 210, which enables processor 204 to determine the optimal signal to send to actuator driver 206 to drive actuator 208. For example, processor 204 may use actuator 208 steady state characteristics as a guiding principle to keep operating actuator 208 within its operating region for haptic strength

Various embodiments can be useful in several scenarios. For instance, testing may be performed at a manufacturer for actuators. This testing may include having processor 204 output multiple overdrive drive signals with various different characteristics to actuator driver 206 and monitor the various characteristics of actuator 208 using sensor 210. The data received by sensor 210 may be stored on memory 104 and used to determine standard drive characteristics to be used to obtain optimal overdrive in haptic devices that do not include sensors 210. In some embodiments, optimal overdrive may mean that actuator 208 is driven at a voltage that is significantly higher than the rated voltage at a duty cycle of at least 70% for a short period of time (e.g., a period of time less than the amount of time it takes actuator 208 to reach a steady state at the rated voltage). This optimal overdrive may allow actuator 208 to attain steady state acceleration in a short period of time. In some embodiments, this testing may be performed on multiple different actuators and the stored data may be associated with different actuator model numbers so multiple different actuators may be incorporated into haptic devices.

In another example, the sensor 210 may be located outside haptic device 202. In this case, sensor 210 monitors the actual haptic output of haptic device 202 in real-time. Sensor 210 then sends this data to processor 204, and processor 204 may modify the characteristics of the drive signal in real time.

### Illustrative Methods for Controlling Actuator Drive Signals for Improving Transient Response Characteristics

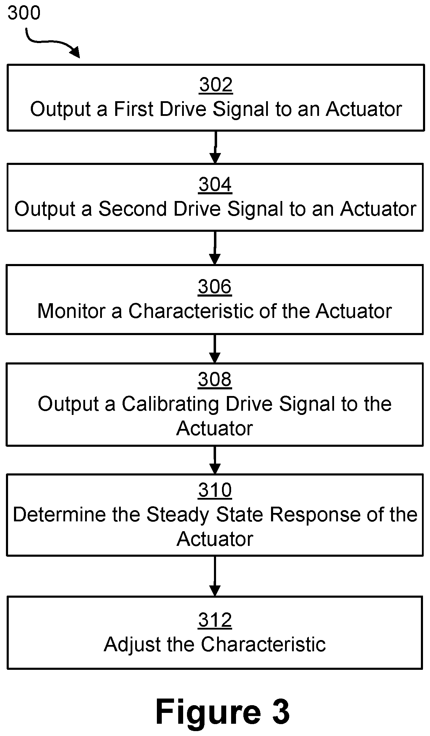

Figure 3 is a flow chart of steps for performing a method for controlling actuator drive signals for improving transient response characteristics according to one embodiment. In some embodiments, the steps in Figure 3 may be implemented in program code that is executed by a processor, for example, the processor in a general purpose computer, a mobile device, virtual reality or augmented reality control system, or a server. In some embodiments, these steps may be implemented by a group of processors. In some embodiments one or more steps shown in Figure 3 may be omitted or performed in a different order. Similarly, in some embodiments, additional steps not shown in Figure 3 may also be performed. The steps below are described with reference to components described above with regard to haptic device 202 shown in Figure 2. Any of the steps and features described with respect to Figure 3 may be used with the fourth, fifth, sixth and ninth aspects described above.

The method 300 begins at step 302 when processor 204 outputs a first drive signal to actuator 208. Actuator 208 is configured to output a haptic effect and comprises one or more rated characteristics. For example, actuator 208 may have a rated voltage, a rated frequency, a rated current, a rated duty cycle, or a variety of other rated characteristics. The first drive signal comprises a first characteristic that is higher than one or more of the rated characteristics. For example, the first drive signal may include a voltage that is double the rated voltage, or a controlled duty cycle that is at least 70%, or both of those characteristics. In some embodiments, the first drive signal is output starting from the very first half cycle. In other embodiments, the first drive signal is output for a time period less than the time it takes for actuator 208 to reach a steady state response. In some embodiments, the processor 204 sends the first drive signal to actuator driver 206, which then drives the actuator 208 to output a haptic effect.

At step 304 processor 204 outputs a second drive signal to actuator 208. In some embodiments, the second drive signal has substantially the same characteristics as the first drive signal (e.g., the same voltage and frequency) but is 180 degrees out of phase from the first drive signal. In other embodiments, the second drive signal comprises a signal having substantially the same characteristics as the first drive signal but the frequency is lowered. In some embodiments, the frequency of the second drive signal is half the frequency of the first drive signal. In still other embodiments, the second drive signal comprises a signal having substantially the same characteristics as the first drive signal but a delay gap is added. Outputting the second drive signal results in actuator 208 applying a braking force and thus stop outputting a haptic effect in a short period of time.

At step 306 processor 204 monitors a property of actuator 208 using a sensor 210. The sensor collects information about actuator 208, like the position, the mass, the voltage, or the current of actuator 208, and transmits that information to processor 204. Processor 204 then uses that information to tell what state actuator 208 is in (e.g., if the actuator 208 is at a steady state).

At step 308 processor 204 outputs a calibrating drive signal to actuator 208. In some embodiments, the calibrating drive signal comprises one or more of the rated characteristics of actuator 208. This includes the rated voltage, the rated frequency, the rated current, the rated duty cycle, or any other potential characteristic of actuator 208.

At step 310 processor 204 determines the steady state response of actuator 208. In some embodiments, outputting a calibrating drive signal to actuator 208 will drive the actuator to a steady state response. By monitoring the characteristics of actuator 208 based on the calibrating drive signal, the correct characteristics may be output to actuator 208 in the first output drive signal and result in an optimal overdrive of actuator 208. In some embodiments, optimal overdrive may mean that actuator 208 is driven at a voltage that is significantly higher than the rated voltage at a duty cycle of at least 70% for a short period of time (e.g., a period of time less than the amount of time it takes actuator 208 to reach a steady state at the rated voltage). This optimal overdrive may allow actuator 208 to attain steady state acceleration in a short period of time. In some embodiments, the steady state characteristics of actuator 208 may be used as a guiding principle to keep operating actuator 208 within the optimal operating region for haptic output.

At step 312 processor 204 adjusts the first characteristic based on data received from sensor 210. In some embodiments, processor 204 will monitor the characteristics of actuator 208 during every cycle. In other embodiments, processor 204 monitors the characteristics of actuator 208 during every half cycle. Based on the characteristics of actuator 208, processor 204 may adjust the first characteristic of the first drive signal to optimal value.

There are numerous advantages of controlling actuator drive signals to improve transient response characteristics. Haptic effects are being integrated into more and more products with users becoming accustomed to certain short and sharp haptic effects generated by specific, typically expensive actuators. Embodiments disclosed herein may ease the process for controlling actuator drive signals. For example, cheaper actuators may be used to create the same haptic effect as more expensive actuators by employing optimal overdrive and active braking that utilizes the steady state response information and other characteristics of the actuator. Further, embodiments described herein provide for monitoring the steady state response information and characteristics of the actuator and adjusting the drive signal based on this information. This may allow for more actuators to be able to produce short and sharp haptic effects and to improve the overall response of the actuator, which may increase the number of devices that include these haptic effects. This may also lead to a more compelling haptic experience and cheaper product for the user.

### General Considerations

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process that is depicted as a flow diagram or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the spirit of the disclosure. For example, the above elements may be components of a larger system, wherein other rules may take precedence over or otherwise modify the application of the present disclosure. Also, a number of steps may be undertaken before, during, or after the above elements are considered. Accordingly, the above description does not bound the scope of the claims.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or values beyond those recited. Headings, lists, and numbering included herein are for ease of explanation only and are not meant to be limiting.

Embodiments in accordance with aspects of the present subject matter can be implemented in digital electronic circuitry, in computer hardware, firmware, software, or in combinations of the preceding. In one embodiment, a computer may comprise a processor or processors. The processor comprises or has access to a computer-readable medium, such as a random access memory (RAM) coupled to the processor. The processor executes computer-executable program instructions stored in memory, such as executing one or more computer programs including a sensor sampling routine, selection routines, and other routines to perform the methods described above.

Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example tangible computer-readable media, that may store instructions that, when executed by the processor, can cause the processor to perform the steps described herein as carried out, or assisted, by a processor. Embodiments of computer-readable media may comprise, but are not limited to, all electronic, optical, magnetic, or other storage devices capable of providing a processor, such as the processor in a web server, with computer-readable instructions. Other examples of media comprise, but are not limited to, a floppy disk, CD-ROM, magnetic disk, memory chip, ROM, RAM, ASIC, configured processor, all optical media, all magnetic tape or other magnetic media, or any other medium from which a computer processor can read. Also, various other devices may include computer-readable media, such as a router, private or public network, or other transmission device. The processor, and the processing, described may be in one or more structures, and may be dispersed through one or more structures. The processor may comprise code for carrying out one or more of the methods (or parts of methods) described herein.

While the present subject matter has been described in detail with respect to specific embodiments thereof, it will be appreciated that those skilled in the art, upon attaining an understanding of the foregoing may readily produce alterations to, variations of, and equivalents to such embodiments. Accordingly, it should be understood that the present disclosure has been presented for purposes of example rather than limitation, and does not preclude inclusion of such modifications, variations and/or additions to the present subject matter as would be readily apparent to one of ordinary skill in the art.

## Claims

1. A haptic feedback system (100, 200) comprising:
an actuator (118, 208) configured to output a haptic effect, the actuator (118, 208) comprising one or more rated characteristics;
a sensor (120, 210) configured to monitor at least one of a position, a mass, a voltage, a back electromotive force, or a current of the actuator (118, 208); and
a processor (102, 204) configured to:
output a first drive signal to the actuator (118, 208), the first drive signal comprising a first characteristic higher than one or more of the rated characteristics, the first drive signal configured to cause the actuator (118, 208) to output the haptic effect; and
output a second drive signal to the actuator (118, 208) based on data received from the sensor (120, 210), the second drive signal configured to cause the actuator (118, 208) to stop outputting the haptic effect.

2. The haptic feedback system (100, 200) of claim 1, wherein the first characteristic comprises at least one of: a voltage, frequency, current, or controlled duty cycle, the controlled duty cycle optionally being at least 70%.

3. The haptic feedback system (100, 200) of claim 1 or claim 2, wherein the first drive signal is output for a time period less than an amount of time necessary for the actuator (118, 208) to reach a steady state at a rated voltage.

4. The haptic feedback system (100, 200) of any preceding claim, wherein the second drive signal comprises substantially the same characteristics as the first drive signal and one or more of a 180 degree phase change, a lower frequency, or a delay gap causing the actuator (118, 208) to apply a braking force.

5. The haptic feedback system (100, 200) of any preceding claim, wherein the processor (102, 204) is further configured to do one or more of the following: (i) output a calibrating drive signal to the actuator (118, 208), the calibrating drive signal comprising one or more of the rated characteristics; (ii) determine a steady state response of the actuator (118, 208) based on data received from the sensor (120, 210); and (iii) adjust the first characteristic based on data received from the sensor (120, 210).

6. The haptic feedback system (100, 200) of claim 5, wherein the processor (102, 204) is configured to adjust the first characteristic based on data received from the sensor (120, 210), and the processor (102, 204) is further configured to adjust the first characteristic to cause the actuator (118, 208) to accelerate or decelerate.

7. A method of generating a haptic effect comprising:
outputting a first drive signal to an actuator (118, 208) configured to output a haptic effect, the actuator (118, 208) comprising one or more rated characteristics, the first drive signal comprising a first characteristic higher than one or more of the rated characteristics;
outputting the haptic effect;
monitoring at least one of a position, a mass, a voltage, a back electromotive force, or a current of the actuator (118, 208) using a sensor (120, 210) coupled to a processor (102, 204);
outputting a second drive signal to the actuator (118, 208) based on data received from the sensor (120, 210); and
stopping output of the haptic effect based on the second drive signal.

8. The method of claim 7, wherein the first characteristic comprises at least one of: a voltage, frequency, current, or controlled duty cycle, the controlled duty cycle optionally being at least 70%.

9. The method of claim 7 or claim 8, wherein the first drive signal is output for a time period less than an amount of time necessary for the actuator (118, 208) to reach a steady state at a rated voltage.

10. The method of any of claims 7 to 9, wherein the second drive signal comprises substantially the same characteristics as the first drive signal and one or more of a 180 degree phase change, a lower frequency, or a delay gap causing the actuator (118, 208) to apply a braking force.

11. The method of any of claims 7 to 10, further comprising outputting a calibrating drive signal to the actuator (118, 208), the calibrating drive signal comprising one or more of the rated characteristics.

12. The method of any of claims 7 to 11, further comprising determining a steady state response of the actuator (118, 208) based on data received from the sensor (120, 210).

13. The method of any of claims 7 to 12, further comprising adjusting the first characteristic based on data received from the sensor (120, 210), wherein adjusting the first characteristic optionally causes the actuator (118, 208) to accelerate or decelerate.

14. The method of any of claims 7 to 13, wherein the sensor (120, 210) is embedded in the actuator (118, 208).

15. A non-transitory computer readable medium comprising program code, which when executed by a processor (102, 204) is configured to cause the processor (102, 204) to give effect to the method as claimed in any one of claims 7 to 14.
